# EUROPÄISCHE PATENTSCHRIFT

(11) **EP 0 629 654 B1**
(45) Veröffentlichungstag und Bekanntmachung des Hinweises auf die Patenterteilung: **13.05.1998**
(21) Anmeldenummer: 94106295.2
(22) Anmeldetag: 22.04.1994
(51) Int. Cl.: C08J 7/12, B05D 3/04, C08L 23/02

(54) **Verfahren zur Vorbehandlung von zu lackierenden Oberflächen von Kunststoffteilen**
Process for pretreating plastic surfaces to be painted
Procédé pour le prétraitement de surfaces de pièces en matière plastique avant peinture

(30) Priorität: 19.06.1993 DE 4320388; 06.09.1993 DE 4330066
(43) Veröffentlichungstag der Anmeldung: 21.12.1994
(73) Patentinhaber: Fluor Technik System GmbH, 36341 Lauterbach (DE)
(72) Erfinder: Möller, Bernd, D-36341 Lauterbach (DE); Schiffer, Horst, D-36137 Grossenlüder (DE)
(74) Vertreter: Schlagwein, Udo, Dipl.-Ing.

(56) Entgegenhaltungen:
- EP-A- 0 102 885
- EP-A- 0 489 197
- WO-A-83/03419
- DE-A- 2 412 025
- DE-A- 4 105 179
- US-A- 3 998 180
- US-A- 4 296 151

## Beschreibung

Die Erfindung betrifft ein Verfahren zur Vorbehandlung von zu lackierenden Oberflächen trockener Kunststoffteile aus Polyäthylen oder Polypropylen durch Einwirkung eines fluorhaltigen Behandlungsgases innerhalb einer geschlossenen Reaktionskammer auf die Kunststoffteile, wobei das Behandlungsgas zusätzlich zu einem inerten Gasbestandteil Sauerstoff enthält.

Ein Verfahren der vorstehenden Art ist beispielsweise in der US-A-4,764,405 beschrieben. Dieses Patent befaßt sich mit der Erzeugung von Hohlkörpern durch Blasformen. Es gibt primär die Lehre, statt Luft ein Gas zu verwenden, welches etwa 1% Fluor, über 18% Sauerstoff und ansonsten überwiegend Stickstoff enthält. Der Gasdruck soll bei 1 bis 30 atm liegen, wobei niedrige Drücke bei höheren Fluorkonzentrationen bevorzugt werden. Da die Einwirkung des Fluors während des Blasens der Behälter erfolgt, bei dem der zu behandelnde Kunststoff warm ist, eignet sich das Verfahren nicht zur Behandlung von bereits vorhandenen Kunststoffteilen.

Die DD-A-280 772 beschreibt auch schon ein Verfahren zur Oberflächenfluorierung von Kunststoffteilen, bei dem die Teile in einem Behälter gemäß einem in der Schrift angeführten Beispiel eine Stunde lang unter Atmosphärendruck mit einem Behandlungsgas behandelt werden, welches etwa 40 Vol-% Fluor, 2,5 Vol-% Sauerstoff und im übrigen Stickstoff enthält. Ein solches Verfahren ist wegen der sehr langen Behandlungszeit und des erforderlichen hohen Fluorgehaltes unwirtschaftlich.

Weiterhin wird in der US-A-4,296,151 ein Fluorierungsverfahren beschrieben, bei dem ein Gemisch aus 90% N2 und 10 % F2 so lange mit Überdruck in einen Behälter eingegeben wird, bis die in ihm enthaltene Luft verdrängt ist. Nach einer Behandlungsdauer von etwa fünf Minuten sind die Kunststoffteile für eine Lackierung ausreichend benetzbar. Auch dieses Verfahren erfordert eine relativ lange Behandlungszeit, so dass es für größere Stückzahlen ungeeignet ist.

Die DE-A-41 05 179 beschreibt ferner ein mit Unterdruck arbeitendes Fluorierungsverfahren, bei der das Austreten von Fluor weitgehend vermieden werden kann. Dieses soll gemäß dieser Schrifterreicht werden, indem das Fluor-Gas-Gemisch in einem unter Unterdruck stehenden Speicherbehälter bereitgestellt wird und von dort in eine evakuierte Reaktionskammer gelangt. Nach der Behandlung wird das Gas in den Speicherbehälter zurückgepumpt. Diese Lehre gibt lediglich an, wie der Verbrauch von Fluor reduziert werden kann. Anhaltspunkte zu der verwendeten Fluorkonzentrationen oder dem erforderlichen Behandlungszeitraum werden nicht gegeben.

Der Erfindung liegt das Problem zugrunde, ein Verfahren der eingangs genannten Art zur Vorbehandlung von zu lakkierenden Oberflächen von Kunststoffteilen derart auszubilden, daß die Oberflächen der Kunststoffteile in möglichst kurzer Zeit und möglichst wirtschaftlich für den nachfolgenden Lackiervorgang vorbereitet werden können.

Dieses Problem wird erfindungsgemäß dadurch gelöst, daß das Behandlungsgas einen absoluten Druck von 333 bis 400 mbar hat, 3 - 5 Volumenprozent Fluor und zusätzlich zu zumindest einem anderen inerten Gasbestandteil 10 - 16 Volumenprozent Sauerstoff enthält, daß die Einwirkzeit des Behandlungsgases 10 bis 180 Sekunden beträgt, daß die Reaktionskammer zunächst auf einen absoluten Druck von 200 mbar evakuiert und dann ein Gasgemisch aus 10 Vol-% F₂ und 90 Vol-% N₂ so lange zugegeben wird, bis der absolute Druck auf 400 mbar angestiegen ist, und daß die pro Zeiteinheit einströmende Menge des Gasgemisches aus F₂ und N₂ so gewählt wird, daß sich ein Druckanstieg in der Reaktionskammer zwischen 100 mbar/min und 200 mbar/min ergibt.

Bei einer solchen Zusammensetzung des Behandlungsgases und einem solchen definierten Druckanstieg in der Reaktionskammer und der hierzu notwendigen Einströmgeschwindigkeit des Gasgemisches aus F₂ und N₂ ergeben sich ausreichend kurze Behandlungszeiten, ohne daß es bei den Kunststoffteilen, welche nahe der Einströmöffnung des Gasgemisches liegen, zu einer Überbehandlung mit Fluor kommt. Eine solche Überbehandlung würde zu einer Verschlechterung der Haftwerte der Oberfläche und damit zu schlechteren Lackierergebnissen führen.

Der Sauerstoffgehalt im Behandlungsgas stellt sich durch die erfindungsgemäße Evakuierung auf 200 mbar durch die Restatmosphäre von selbst ein, so daß das zugeführte Gasgemisch keinen Sauerstoff enthalten muß. Hierdurch ist das Verfahren besonders wirtschaftlich, weil Behandlungsgas mit 10 Vol-% F₂ und 90 Vol-% N₂ im Handel in Flaschen abgefüllt erhältlich ist.

Bei einer Behandlung unter den erfindungsgemäßen Bedingungen ergibt sich eine optimale Haftung von in der Automobilbranche verwendetem Lack auf den Kunststoffteilen, so daß das Verfahren insbesondere zur Vorbehandlung von für Kraftfahrzeuge bestimmten Kunststoffteilen geeignet ist.

Eine besonders vorteilhafte Weiterbildung des Verfahrens ist gegeben, wenn vor der Einwirkung der fluorhaltigen Behandlungsgase die mit den zu behandelnden Kunststoffteilen gefüllte Reaktionskammern zum Verdampfen von Feuchtigkeit auf den Kunststoffteilen evakuiert wird.

Hierdurch ergibt sich eine optimal wirtschaftliche Trocknung der zu behandelnden Kunststoffteile, weil der Anlage keine separaten Trocknungskammern vorgeschaltet werden müssen. Der erforderliche Unterdruck in der Reaktionskammer richtet sich nach der in ihm herrschenden Temperatur und dürfte in der Praxis bei 23 mbar liegen. Zur Durchführung des erfindungsgemäßen Trocknungsvorganges füllt man die Kunststoffteile in die Reaktionskammer und evakuiert diese. Erst wenn alle Feuchtigkeit verdunstet ist, beginnt man durch Zuführen des Behandlungsgases mit der Fluorierung.

## Patentansprüche

1. Verfahren zur Vorbehandlung von zu lackierenden Oberflächen trockener Kunststoffteile aus Polyäthylen oder Polypropylen durch Einwirkung eines fluorhaltigen Behandlungsgases innerhalb einer geschlossenen Reaktionskammer auf die Kunststoffteile, wobei das Behandlungsgas zusätzlich zu einem inerten Gasbestandteil Sauerstoff enthält, **dadurch gekennzeichnet**, daß das Behandlungsgas einen absoluten Druck von 333 bis 400 mbar hat, 3 - 5 Volumenprozent Fluor und zusätzlich zu zumindest einem anderen inerten Gasbestandteil 10 - 16 Volumenprozent Sauerstoff enthält, daß die Einwirkzeit des Behandlungsgases 10 bis 180 Sekunden beträgt, daß die Reaktionskammer zunächst auf einen absoluten Druck von 200 mbar evakuiert und dann ein Gasgemisch aus 10 Vol-% F₂ und 90 Vol-% N₂ so lange zugegeben wird, bis der absolute Druck auf 400 mbar angestiegen ist, und daß die pro Zeiteinheit einströmende Menge des Gasgemisches aus F₂ und N₂ so gewählt wird, daß sich ein Druckanstieg in der Reaktionskammer zwischen 100 mbar/min und 200 mbar/min ergibt.

2. Verfahren nach Anspruch 1, **dadurch gekennzeichnet**, daß vor der Einwirkung der fluorhaltigen Behandlungsgase die mit den zu behandelnden Kunststoffteilen gefüllte Reaktionskammern zum Verdampfen von Feuchtigkeit auf den Kunststoffteilen evakuiert wird.

## Claims

1. Process for pretreating paintable surfaces of dry plastic parts made of polyethylene or polypropylene by reaction of a fluorine-containing treatment gas within a closed reaction chamber on the plastic parts, the treatment gas containing oxygen in addition to an inert gas component, characterized in that the treatment gas has an absolute pressure of 333 to 400 mbar, contains 3 to 5% by volume of fluorine and 10 to 16% by volume of oxygen in addition to at least one other inert gas component, in that the reaction time of the treatment gas is 10 to 180 seconds, in that the reaction chamber is initially evacuated to an absolute pressure of 200 mbar and a gaseous mixture containing 10% by volume of F₂ and 90% by volume of N₂ is then added until the absolute pressure has risen to 400 mbar and in that the quantity of gaseous mixture consisting of F₂ and N₂ entering per unit time is selected such that a rise in pressure in the reaction chamber of between 100 mbar/min and 200 mbar/min is produced.

2. Process according to claim 1, characterized in that, prior to the reaction of the fluorine-containing treatment gases, the reaction chambers filled with the plastic parts to be treated are evacuated to evaporate moisture on the plastic parts.

## Revendications

1. Procédé pour le traitement préliminaire de surfaces à vernir de pièces sèches en polyéthylène ou en polypropylène, par l'action d'un gaz fluoré sur lesdites pièces à l'intérieur d'une chambre de réaction fermée, ledit gaz contenant de l'oxygène en addition à un constituant gazeux inerte, caractérisé en ce que la pression absolue du gaz est de 333 à 400 mbar, qu'il contient 3 à 5 % en volume de fluor, et, en addition à au moins un autre constituant gazeux inerte, 10 à 16 % en volume d'oxygène, que la durée d'action du gaz est de 10 à 180 secondes, que la chambre de réaction est amenée tout d'abord à une pression absolue de 200 mbar, et reçoit ensuite un mélange gazeux fait de 10 % en volume de F₂ et de 90 % en volume de N₂ jusqu'à ce que la pression absolue soit montée jusqu'à 400 mbar, et que la quantité du mélange gazeux fait de F₂ et de N₂ qui pénètre dans la chambre de réaction par unité de temps, est sélectionnée de manière à obtenir dans ladite chambre une montée en pression comprise entre 100 mbar/min et 200 mbar/min.

2. Procédé selon la revendication 1, caractérisé en ce qu'avant l'action des gaz fluorés, la chambre de réaction remplie des pièces en matière plastique à traiter est placée sous vide afin d'évaporer l'humidité présente sur lesdites pièces.
